# EUROPEAN PATENT APPLICATION

(11) **EP 2 260 715 A1**
(43) Date of publication of application: **15.12.2010**
(21) Application number: 09730046.1
(22) Date of filing: 02.04.2009
(51) Int. Cl.: A23B 7/04, A23B 7/055

(54) **METHOD FOR FREEZING FRUIT AND VEGETABLE PRODUCE**

(30) Priority: 10.04.2008 ES 200801021; 10.04.2008 ES 200801022
(71) Applicant: Cryosalus System, S.L., 089SP Esplugues (Barcelona) (ES)
(72) Inventor: ROSICH FERRER, Blanca, E-08029 BARCELONA, (ES)
(74) Representative: PROPI, S.L.
(86) International application number: PCT/ES2009/070088
(87) International publication number: WO 2009/125041

(57) **Abstract**

The procedure consists of subjecting the product to osmosis in order to force the fruit perspiration until reducing its water content between 6 and 10%, or whether using the vacuum cooling (vacuum cooler) technique or through a dry air stream, after which said products are flashily frozen in a tunnel or closet with liquid nitrogen, carbonic anhydride or mechanical cooling depending on the product size and shape (whole, peeled or sliced), at a temperature below -40°C. The dry air can be supplied through a dehumidifier, or it can either be dried through a strong air cooling and then heating.

## Description

### Object of the invention

The present invention relates to an industrial process specially designed for application in the field of processing agricultural products, wherein the whole or sliced horticultural foods freshly harvested or collected from the tree or plant at the time of their optimal ripening are frozen.

The object of the invention is to provide a freezing procedure wherein metabolic processes and fruit respiration are reduced, allowing extending the storage time thereof, all of this without destroying its structure in said process, allowing the frozen foods to be stored during high production periods in order to be supplied in the market in shortage times, keeping all of their organoleptic qualities.

Is also object of the invention to obtain a quick freezing industrial process, in order to allow handling high volumes of horticultural products in the shortest time possible.

### Background of the invention

Freezing foods in the Western world was based on the remarks of Clarence Birdseye during his stay in Canada on the behavior of the Eskimos, seeing as these froze freshly caught fishes by laying them on the ice.

He also proved that when the cold was more intense, freezing occurred much rapidly, whereby ice crystals were much smaller, leaving the cell structure of the fishes less damaged, being their quality much better when are eaten.

Based on these experiences he submitted its first patents in the United States of America more than 80 years ago for freezing foods, especially meats, fishes and vegetables.

What Birdseye could not get was to freeze foods with high water content, such as most horticultural products. Since when these foods were frozen, the water contained both inside and outside the cells by being transformed into ice expands disrupting the cell structure, whereby when thawing the food, the disrupted membranes of the cells can not retain water therein, so that its organoleptic characteristics are very reduced, thus losing its appeal to the consumer.

The growth of a fruit generally involves an initial period of cell multiplication, followed by a longer period for enlarging the cells that end in ripening. A fruit is physiologically ripened when it has reached its final growing step, and has usually developed the ability to ripen after its collection.

During ripening, fruits suffer a succession of important biochemical and physiological changes thus achieving as a result the sensory characteristics optimum for the consumption.

Behind cell membranes are the juices. The juices inside the fruit cells are composed of substances dissolved in water, such as acids, pigments, sugars, minerals, vitamins, etc.. Some of these small volume substances or compounds, such as water or certain acids, can quite easily come out through the microholes of the cell membrane or wall.

When horticultural products are ripened have their cells completely filled with water, so that the simple freezing convection (gas or liquid) causes the water to freeze forming ice crystals disrupting the structure and cracking the cell walls of the fruit.

By subsequently thawing the fruit or vegetable, the water comes out through the cracked cell walls, leaving an appalling texture.

With the exception of very small fruits such as berry fruits, wherein freezing in freezing tunnels does not cause major damages. The immediate consequence is that when these fruits are thawed, their original structure is relatively well maintained.

When meat and fish are thawed, by having a lower water percentage, the damages are less. The faster a product is frozen, smaller the water crystals; thus less disrupting the cell walls, wherewith less liquid is released when thawing. Domestically it is known that the meat or fish should be thawed in a bowl, so that the released liquid does not mess up the kitchen worktop. One reason for this is that when freezing, something in the cell structure of such foods has disrupted. The less the water percentage in the food, lesser the effect described.

When the cold chain is disrupted, by refreezing the food, always much more slowly than in the freezing tunnel or chamber, these are improperly frozen thus forming large ice crystals that disrupt the food structure.

Multiple patents are known for freezing horticultural products using laboratory or industrial methods. But none of them has been effective, failing to put horticultural products such as apples or tomatoes on supermarket shelves, without loosing their organoleptic characteristics after their thawing.

The patent US 2004/096559 describes a procedure for freezing vegetables or fruits, wherein products are partially dehydrated to dramatically reduce the original water content of the product. According to this procedure, products are dehydrated using hot air at a temperature above 90°C, the water content being preferably reduced between 25% and 60%. Subsequently, these are subjected to a flash freezing treatment by immersing the products in a liquid nitrogen or liquid carbon dioxide bath at a temperature close to -200°C. When are thawed, the products well maintain their taste, but not their appearance, which is very wrinkled since a very significant part of water has been removed from them.

In order to reduce the size of ice crystals produced inside the fruits subjected to a freezing procedure, the patent EP 1525801 describes a procedure wherein the fruit is subjected to a step temperature lowering system.

The fruit is slowly cooled up to 0°C, then is slowly frozen up to a temperature between -8°C and -12°C at a cooling rate of 10°C over more than 40°C per hour, so that the temperature difference between surface and the interior is 1.5°C, and finally is further cooled until ice formation is caused. Although this procedure does preserve the taste of the fruit better than other alternative procedures, wherein the fruit is sprinkled with sugary liquids or powders, is oriented to fruits eaten in their frozen state. In the case that the fruits are thawed, these considerably lose their original texture.

Patents FR 2878412, EP 0572745 and US6004607 describe a procedure wherein the products are immersed in an aqueous solution for a surface pre-freezing, before being cooled or then frozen using conventional methods. According to these documents, by immersing the products in the aqueous solution the fruit envelope, its outermost layer, is frozen, without being caused for the time the core fruit freezing, which reduces the damages caused posteriorly to the product envelope by forming ice crystals therein. These procedures however suffer from important drawbacks: a) the taste change caused in the immersed products by the products added to the aqueous solution to lower the water freezing point. The products commonly used are Sodium Chloride, Calcium Chloride, sugars or alcohols, and b) the cell walls are disrupted when frozen, wherewith they also lose their texture when thawed.

WO 2007/057888 describes a method for preserving fresh agricultural products, wherein these are manually handled and the moisture is removed from them in an amount between 5% and 20%, not exceeding a rate of 30 x 10⁻⁶ kg per unit area of said product in square meters. Subsequently, said products are frozen.

In P200701391 the food is slowly and gently dehydrated by convention with an air with a humidity preferably between 60% and 70% at a temperature between 5°C and 10°C in order to partially remove the food water content, especially from its envelope or outermost layer, between about 2% and about 10% by weight. Optionally, the fruit thus obtained from previous operations is vacuum wrapped with a tight, flexible, preferably transparent and retractable wrapping. The wrapped fruit is subjected to a flash freezing treatment by immersing it in a stirring aqueous solution of organic or inorganic salts, which keeps the water in liquid state even though its temperature is below -50°C, for a time ranging between 2 and 10 minutes depending on the type and size of fruit.

The problem with this procedure is that it is expensive because is excessively slow and requires much manipulation, so that when handling industrially large volumes of horticultural products, the resources and times needed to carry out said global treatment limits the amount of the daily obtained product, with economic consequences and negative repercussions that this entails.

### Description of the invention

The method for freezing horticultural products proposed by the invention solves in a fully satisfactory manner the aforementioned problems, thus obtaining a high quality frozen product, without disrupting the internal structure or the cell walls of the foods, so that once thawed their appearance, taste, smell and texture are similar to those they had before freezing, all of this within significantly reduced times for executing the procedure.

For this purpose, the recommended procedure aims to reduce the fruit water content between 6 and 10%, forcing the fruit perspiration in a relatively quickly manner by subjecting it to an osmosis treatment, or whether using a vacuum cooler (vacuum cooling), in both cases in order to reduce its water content between 6 and 10%. The fruit can also be subjected to a relatively dry air stream between 0 and 50% of relative humidity, and a temperature between 10 and 30°C. In this case, the dry air might come from an industrial dehumidifier, leaving the air with concentrations between 0 and 50% of relative humidity, depending on whether the product to be dehydrated is a whole, or sliced and peeled fruit. Optionally, the dry air may consist of air cooled up to a temperature from about 0 to 5°C to remove most part of the contained water, and then heated up for about 15° to 30° having a humidity from around 20% to 50% of RH, for which said heating may be obtained passing the product through the radiator of the refrigeration unit that was used for cooling it, or through a heat source, if another source has been used to cool the air, such as the nitrogen remaining in the freezing tunnel or chamber.

Subsequently, after the forced perspiration by using any of the three mentioned methods, the fruit is then quickly frozen in a few minutes within a tunnel or a closet with liquid nitrogen, carbonic anhydride or mechanical cooling depending on the size and shape (whole or peeled and sliced) of the horticultural product, in all cases at a temperature below -40°C.

### Preferred embodiment of the invention

More specifically, the procedure consists of making the food to perspire for a certain time under specific conditions in order to make it loses a light percentage of water content.

As mentioned before, the ripened fruits have their cells completely filled with water, whereby if the fruit is forced to perspire, and thus losing enough water amount, when the ice freezes, when growing, will not disrupt the cell walls, wherewith when thawing the fruit nothing will happen, since the water will be relocated without problem in the cell. In this way, the molecular structure will be prevented from disrupting, but without changing its appearance.

Once forced perspiration is completed, it passes whether through a freezing tunnel or continuous chamber or through a special closet for freezing by cycles.

Industrially, it is suited that processes be fast and cheap, whereby the most appropriate methods to the desired end should be chosen.

Perspiration is forced by osmosis, by immersing the whole or sliced fruits into a suitable liquid or syrup, in order to force the water to come out until reaching the desired level. In the whole and tough skin fruits, such as tomatoes, applying a permeation skin treatment will be required.

In cases wherein the water percentage to be removed is small, the "vacuum cooling" (vacuum cooler) technique, widely used after harvests to flashily freeze foods can be used, presenting the advantage of low power consumption, but having the drawback that the fruit perspires relatively little: 1 % of water for every 5°C cooled.

Low-humidity air between 0 and 50 RH at a temperature between 10 and 30°C can also be used in order to force the perspiration, so that the hotter and drier the air the faster the perspiration. In whole and tough skin fruits, such as tomatoes, using an air very dry and relatively hot to force perspiration and sometimes apply it a permeation treatment will be required, whereas for peeled and sliced into low thick sheets fruit, for example 8 mm, the air must be less dry and cooler in order to not cause a too strong surface drying.

Industrially there are several methods to achieve this purpose, such as:
- Passing the dry air to the proper temperature through an industrial dehumidifier, such as those made of silica gel, leaving the air with a relative humidity between 0 and 50% depending on the product (whole or sliced and peeled) to be dehydrated.
- Cooling the dry air up to a temperature from about 0 to 5°C in order to remove most part of the water contained, and then heated up to about 15° to 30°C leaving it with a humidity from about 20% to 50% of RH. Whether passing it through the radiator of the refrigeration unit that has been used for cooling it, or through a heat source, if another source has been used to cool the air, such as the nitrogen remaining in the freezing tunnel.

It should be mentioned that the horticultural foods of the procedure are alive, whereby is appropriate that their industrial handling be performed at a moderate temperature, because if the dehydration is performed at temperatures above 35°C these are rapidly degraded.

As for the perspiration times, these are highly variable, since the peeled and sliced fruit can lose the necessary water with a light system within minutes, whereas other products such as whole tomatoes, have a very tough skin which forces to use more intensive systems for hours.

The freezing system essentially depends on the size of the product to be frozen, although it is always suited for the freezing to be very fast so that only very small crystals are formed, that do no harm at all the foods.

In said freezing process, previously packing the foods is not required.

In the case that the freezing process is orientated to freeze sliced and peeled fruit, nitrogen, CO₂ or mechanical cooling tunnels can be used, since by having a very small size the freezing is carried out very quickly.

To freeze whole fruits and horticultural products, nitrogen or CO₂ tunnels are required.

The mentioned horticultural products, once having come out from the tunnel, are bulky deposited in tanks inside a chamber for frozen products at a temperature below -18°C. These can be kept for months therein.

Subsequently, said frozen products can be packaged into different commercial sizes requested by customers, whether of a single product or a mixture of several.

The great advantage of this system is that the texture of foods measured by a penetrometer before and after thawing almost does not vary, for whole as peeled and sliced pieces.

## Claims

1. Procedure for freezing horticultural products **characterized in that** the following operational phases are established for the same:
• Forcing by osmosis the fruit water loss, in order to reduce only its water content between 6 and 10%.
• Flashily freezing horticultural products after the mentioned perspiration within a tunnel or a closet with liquid nitrogen, carbonic anhydride or mechanical cooling depending on the product size and shape (whole, peeled or sliced), at a temperature below -40°C.

2. Procedure for freezing horticultural products, according to claim 1, **characterized in that** in the case wherein the water percentage to be removed is small, the perspiration forced by osmosis uses the "vacuum cooling" (vacuum cooler) technique.

3. Procedure for freezing horticultural products, according to claim 1, **characterized in that** in order to force the water loss from the fruit a relatively dry air stream, between 0 and 50% of humidity and at a temperature between 10 and 30°C is used.

4. Procedure for freezing horticultural products, according to claims 1 and 3, **characterized in that** the dry air used to force the water loss from the fruit comes from an industrial dehumidifier, with a relative humidity between 0 and 50% depending on the type, size and shape of the horticultural product.

5. Procedure for freezing horticultural products, according to claims 1 and 3, **characterized in that** the process through which the fruit perspiration is forced is carried out using dried air previously cooled up to a temperature from about 0 to 5°C, in order to remove most part of the water contained in said air, to be subsequently subjected to a heating process until reaching a drying temperature between 15 and 30°C, obtaining a humidity for said air between 20 and 50% of RH.

6. Procedure for freezing horticultural products, according to claim 5, **characterized in that** the cooled air is heated using its conduction through the radiator of the refrigeration unit used for its cooling, or whether through a heat source, if another source has been used to cool the air, such as the nitrogen remaining in the freezing tunnel.
